# EUROPÄISCHE PATENTSCHRIFT

(11) **EP 1 127 669 B1**
(45) Veröffentlichungstag und Bekanntmachung des Hinweises auf die Patenterteilung: **05.04.2006**
(21) Anmeldenummer: 01101493.3
(22) Anmeldetag: 24.01.2001
(51) Int. Cl.: B29C 44/08, B29C 44/12

(54) **Verfahren zum Herstellen eines Verbundbauteils mit geschäumter Oberfläche**
Method for manufacturing a composite component with a foamed surface
Procédé pour la fabrication d'un élément composite avec surface en mousse

(30) Priorität: 28.02.2000 DE 10009470
(43) Veröffentlichungstag der Anmeldung: 29.08.2001
(73) Patentinhaber: Möller Plast GmbH, 33649 Bielefeld (DE)
(72) Erfinder: Beckmann, Friedhelm, Dipl.-Ing., 32120 Hiddenhausen (DE)
(74) Vertreter: Schirmer, Siegfried

(56) Entgegenhaltungen:
- EP-A- 0 965 425
- DE-A- 4 030 478
- DE-A- 4 304 751
- DE-A- 19 745 122

## Beschreibung

Die Erfindung betrifft ein Verfahren zum Herstellen eines Verbundbauteils mit geschäumter Oberfläche.

Beim Einsatz von Bauteilen mit dekorativer Oberfläche werden zunehmend höhere Ansprüche an Optik und Haptik gestellt, vor allem bei Verkleidungsteilen im Fahrzeugbereich. Um die gewünschten Eigenschaften erreichen zu können, werden deshalb Materialien verwendet, die in einem zusätzlichen Arbeitsgang auf ein festes Träger- bzw. Kernmaterial aufgebracht werden.

Im einfachsten Fall verwendet man sogenannte Softlacksysteme, die in einer Schichtstärke von ca. 40 bis 70 µm auf das Bauteil aufgesprüht werden. Dies führt jedoch nicht in allen Fällen zu einer ausreichenden Haptik, so daß alternativ hierzu Schaumfolien aus z.B. TPO oder PVC Verwendung finden. Diese Folien sind jedoch recht teuer, wobei neben dem reinen Materialwert die Aufbringung der Schaumfolie der Kosten zusätzlich erhöht. Darüber hinaus müssen in den Fällen, in denen keine Verträglichkeit zwischen Träger- und Schaummaterial gegeben ist, aufwendige Vorbehandlungsmethoden eingesetzt werden.

Aus dem Dokument DE 43 04 751 A 1 ist ein Verfahren zur Herstellung eines Kunststoffteils bekannt, auf das eine Oberflächenschicht aus einem Schaumkunststoff aus einem thermoplastischen Elastomeren mit einer Außenhaut aufgebracht wird. Das Kunststoffteil wird bei der Herstellung in einer Spritzgußform angeordnet, so daß auf der Seite der aufzubringenden Oberflächenschicht ein Hohlraum frei bleibt. In den Hohlraum wird eine schäumbare Masse aus dem thermoplastischen Elastomeren und einem Treibmittel gespritzt und beim Verschäumen der Masse der Hohlraum vergrößert.

Die Aufgabe der Erfindung besteht daher darin, ein Verfahren zu schaffen, das eine direkt Aufbringung eines optisch und haptisch ansprechenden Materials erlaubt und zu einer in der Härte einstellbaren Beschichtung führt.

Diese Aufgabe wird erfindungsgemäß durch ein Verfahren zum Herstellen eines Verbundbauteils mit geschäumter Oberfläche erreicht, bei dem ein eine zu beschichtende Oberfläche aufweisendes Trägerteil in ein Formwerkzeug eingelegt wird, bei einer ersten Temperatur eine Schicht eines unverschäumten oder lediglich vorverschäumten, schäumbaren Materials auf die Oberfläche des Trägerteils aufgebracht wird, und das schäumbare Material bei einer oder nacheinander mehreren zweiten Temperatur(en), die höher ist (sind) als die erste Temperatur, mit einem chemischen Treibmittel oder einer Treibmittelmischung aufgeschäumt wird, so daß das schäumbare Material im aufgeschäumten Zustand einen Zwischenraum zwischen der Oberfläche des Trägerteils und einer Formoberfläche des Formwerkzeugs ausfüllt und sich einerseits mit der Oberfläche des Trägerteils verbindet und andererseits an die Formoberfläche anlegt.

Es kann vorgesehen sein, daß das Trägerteil in demselben Formwerkzeug hergestellt wird wie das Verbundbauteil, insbesondere durch Spritzen, Extrudieren oder Blasextrudieren.

Das Trägerteil kann härter sein als das aufgeschäumte Material und insbesondere aus mikrozellularem Schaum bestehen. Alternativ kann das Trägerteil aus einem weicheren Schaumwerkstoff bestehen.

In Ausgestaltung des Verfahrens kann vorgesehen sein, daß das schäumbare Material bei oder nach dem Aufbringen auf die Oberfläche des Trägerteils bei der ersten Temperatur mit einem physikalischen Treibmittel aufgeschäumt wird und anschließend bei der (den) zweiten Temperatur(en) mit einem chemischen Treibmittel oder einer Treibmittelmischung weiter aufgeschäumt wird.

Die erste Temperatur kann in einem Bereich von etwa 80°C bis etwa 120°C liegen, während die zweite Temperatur in einem Bereich von etwa 120°C bis etwa 250°C liegen kann.

Es kann vorgesehen sein, daß anstelle oder zusätzlich zu dem chemischen Treibmittel bzw. der Treibmittelmischung Mikrospheres verwendet werden.

Es kann ein flächiges oder dreidimensional geformtes Verbundbauteil hergestellt werden.

Das zu schäumende Material kann im Spritz-, Extrusions- oder Blasextrusionsverfahren auf das Trägerteil aufgebracht werden.

In Ausgestaltung des Verfahrens kann mit einer geeigneten Formoberfläche des Formwerkzeugs eine Abformnabung auf dem aufgeschäumten Material erzeugt werden.

In weiterer Ausgestaltung des Verfahrens kann vorgesehen sein, daß ein Material für das zunächst ungeformte Trägerteil in das Formwerkzeug eingebracht wird, auf dieses Material das schäumbare Material aufgebracht wird und anschließend (a) das schäumbare Material aufgeschäumt und (b) das Trägerteil ausgeformt wird oder umgekehrt (b, a).

Eine Ausführungsform des Verfahrens zeichnet sich dadurch aus, daß ein Dekormaterial auf das noch unverschäumte, schäumbare Material aufgebracht und anschließend das schäumbare Material aufgeschäumt wird.

Zum Aufschäumen des schäumbaren Materials kann die Kavität des Formwerkzeugs vergrößert werden.

Es kann vorgesehen sein, daß die für das Aufschäumen des schäumbaren Materials erforderliche Wärme zumindest teilweise durch den Wärmeinhalt des Formwerkzeugs eingebracht wird.

## Patentansprüche

1. Verfahren zum Herstellen eines Verbundbauteils mit geschäumter Oberfläche, bei dem
- ein eine zu beschichtende Oberfläche aufweisendes Trägerteil in ein Formwerkzeug eingelegt wird,
- eine Schicht eines unverschäumten oder lediglich vorverschäumten, schäumbaren Materials auf die Oberfläche des Trägerteils aufgebracht wird und
- das schäumbare Material mit einem chemischen Treibmittel oder einer Treibmittelmischung aufgeschäumt wird, so daß das schäumbare Material im aufgeschäumten Zustand einen Zwischenraum zwischen der Oberfläche des Trägerteils und einer Formoberfläche eines Formwerkzeugs ausfüllt und sich einerseits mit der Oberfläche des Trägerteils verbindet und andererseits an die Form-oberfläche anlegt,
**dadurch gekennzeichnet, daß** die Schicht des unverschäumten oder lediglich vorverschäumten Materials bei einer ersten Temperatur auf die Oberfläche des Trägerteils aufgebracht wird und daß das schäumende Material bei einer oder nacheinander mehreren zweiten Temperatur(en), die höher ist (sind) als die erste Temperatur, mit dem chemischen Treibmittel oder der Treibmittelmischung aufgeschäumt wird.

2. Verfahren nach Anspruch 1, **dadurch gekennzeichnet, daß** das Trägerteil in demselben Formwerkzeug hergestellt wird wie das Verbundbauteil, insbesondere durch Spritzen, Extrudieren oder Blasextrudieren.

3. Verfahren nach Anspruch 1 oder 2, **dadurch gekennzeichnet, daß** das Trägerteil härter ist als das aufgeschäumte Material und insbesondere aus einem mikrozellularen Schaum besteht.

4. Verfahren nach Anspruch 1 oder 2, **dadurch gekennzeichnet, daß** das Trägerteil aus einem Schaumwerkstoff besteht, der weicher ist als das aufgeschäumte Material.

5. Verfahren nach einem der vorangehenden Ansprüche, **dadurch gekennzeichnet, daß** das schäumbare Material bei oder nach dem Aufbringen auf die Oberfläche des Trägerteils bei der ersten Temperatur mit einem physikalischen Treibmittel aufgeschäumt wird und anschließend bei der (den) zweiten Temperatur(en) mit einem chemischen Treibmittel oder einer Treibmittelmischung weiter aufgeschäumt wird.

6. Verfahren nach einem der vorangehenden Ansprüche, **dadurch gekennzeichnet, daß** die erste Temperatur in einem Bereich von etwa 80°C bis etwa 120°C liegt.

7. Verfahren nach einem der vorangehenden Ansprüche, **dadurch gekennzeichnet, daß** die zweite(n) Temperatur(en) in einem Bereich von etwa 120°C bis etwa 250° liegt (liegen).

8. Verfahren nach einem der vorangehenden Ansprüche, **dadurch gekennzeichnet, daß** anstelle oder zusätzlich zu dem chemischen Treibmittel bzw. der Treibmittelmischung Mikrospheres verwendet werden.

9. Verfahren nach einem der vorangehenden Ansprüche, **dadurch gekennzeichnet, daß** ein flächiges oder dreidimensional geformtes Verbundbauteil hergestellt wird.

10. Verfahren nach einem der vorangehenden Ansprüche, **dadurch gekennzeichnet, daß** das schäumbare Material im Spritz-, Extrusions- oder Blasextrusionsverfahren auf das Trägerteil aufgebracht wird.

11. Verfahren nach einem der vorangehenden Ansprüche, **dadurch gekennzeichnet, daß** mit einer geeigneten Formoberfläche des Formwerkzeugs eine Abformnabung auf dem aufgeschäumten Material erzeugt wird.

12. Verfahren nach einem der vorangehenden Ansprüche, **dadurch gekennzeichnet, daß** ein Material für das zunächst ungeformte Trägerteil in das Formwerkzeug eingebracht wird, auf dieses Material das schäumbare Material aufgebracht wird und anschließend (a) das schäumbare Material aufgeschäumt und (b) das Trägerteil ausgeformt wird oder umgekehrt (b, a).

13. Verfahren nach einem der vorangehenden Ansprüche, **dadurch gekennzeichnet, daß** ein Dekormaterial auf das noch unverschäumte, schäumbare Material aufgebracht und anschließend das schäumbare Material aufgeschäumt wird.

14. Verfahren nach einem der vorangehenden Ansprüche, **dadurch gekennzeichnet, daß** zum Aufschäumen des schäumbaren Materials die Kavität des Formwerkzeug vergrößert wird.

15. Verfahren nach einem der vorangehenden Ansprüche, **dadurch gekennzeichnet, daß** die für das Aufschäumen des schäumbaren Materials erforderliche Wärme zumindest teilweise durch den Wärmeinhalt des Formwerkzeugs eingebracht wird.

## Claims

1. Method of producing a composite component with foamed surface, in which
- a support part having a surface to be coated is placed in a mould tool,
- a layer of unfoamed or merely prefoamed foamable material is applied to the surface of the support part and
- the foamable material is foamed up by a chemical drive agent or a drive agent mixture so that the foamable material in the foamed state fills out an intermediate space between the surface of the support part and a mould surface of the mould tool and connects at one side with the surface of the support part and bears on the other side against the mould surface,
**characterised in that** the layer of unfoamed or merely prefoamed material at a first temperature is applied to the surface of the support part and that the foaming material at a second temperature, or several successive second temperatures, higher than the first temperature is foamed by the chemical drive agent or the drive agent mixture.

2. Method according to claim 1, **characterised in that** the support part is produced in the same mould tool as the composite component, particularly by injection-moulding, extruding or blow-moulding extrusion.

3. Method according to claim 1 or 2, **characterised in that** the support part is harder than the foamed material and, in particular, consists of a microcellular foam.

4. Method according to claim 1 or 2, **characterised in that** the support part consists of a foam material which is softer than the foamed material.

5. Method according to one of the preceding claims, **characterised in that** the foamable material is foamed at the first temperature by a physical drive agent at or after application to the surface of the support part and subsequently is foamed at the second temperature or temperatures by a chemical drive agent or drive agent mixture.

6. Method according to one of the preceding claims, **characterised in that** the first temperature lies in a range of approximately 80° C up to approximately 120° C.

7. Method according to one of the preceding claims, **characterised in that** the second temperature or temperatures lies or lie in the range of approximately 120° to approximately 250° C.

8. Method according to one of the preceding claims, **characterised in that** microspheres are used instead of or additionally to the chemical drive agent or drive agent mixture.

9. Method according to one of the preceding claims, **characterised in that** a flat or three-dimensionally shaped composite component is produced.

10. Method according to one of the preceding claims, **characterised in that** the foamable material is applied to the support part in an injection-moulding method, an extrusion method or a blow-moulding extrusion method.

11. Method according to one of the preceding claims, **characterised in that** a moulding hub is produced on the foamed material by a suitable mould surface of the mould tool.

12. Method according to one of the preceding claims, **characterised in that** a material for the next unshaped support part is introduced into the mould tool, the foamable material is applied to this material and subsequently (a) the foamable material is foamed up and (b) the support part is moulded, or vice versa (b, a).

13. Method according to one of the preceding claims, **characterised in that** a decorative material is applied to the still unfoamed foamable material and the foamable material is subsequently foamed.

14. Method according to one of the preceding claims, **characterised in that** the cavity of the mould tool is enlarged for foaming of the foamable material.

15. Method according to one of the preceding claims, **characterised in that** the heat required for foaming the foamable material is introduced at least partly by the heat content of the mould tool.

## Revendications

1. Procédé pour la fabrication d'un élément composite avec surface en mousse, selon lequel
- une pièce support présentant une surface à revêtir est déposée dans un moule,
- une couche d'un matériau expansible, non expansé ou seulement pré-expansé est appliquée sur la surface de la pièce support, et
- le matériau expansible est expansé avec un agent expansif chimique ou un mélange d'agents expansifs, si bien que le matériau expansible en l'état expansé remplit un espace intermédiaire entre la surface de la pièce support et une surface du moule et que, d'une part, il se lie à la surface de la pièce support et, d'autre part, s'applique sur la surface du moule,
**caractérisé en ce que**
la couche du matériau expansible, non expansé ou seulement pré-expansé est appliquée à une première température à la surface de la pièce support, et le matériau expansible est expansé à une ou plusieurs deuxième(s) température(s) successive(s) supérieure(s) à la première température avec un agent expansif chimique ou un mélange d'agents expansifs.

2. Procédé selon la revendication 1,
**caractérisé en ce que**
la pièce support est fabriquée dans le même moule que l'élément composite, en particulier par injection, par extrusion ou par extrusion soufflage.

3. Procédé selon la revendication 1 ou 2,
**caractérisé en ce que**
la pièce support est plus dure que le matériau expansé et, en particulier, est constituée d'une mousse microcellulaire.

4. Procédé selon la revendication 1 ou 2,
**caractérisé en ce que**
la pièce support est constituée d'un matériau expansible plus mou que le matériau expansé.

5. Procédé selon l'une quelconque des revendications précédentes,
**caractérisé en ce que**
le matériau expansible lors de ou après l'application sur la surface de la pièce support est expansé à la première température avec un agent expansif physique et, ensuite, est expansé encore à la ou les deuxième(s) température(s) avec un agent expansif chimique ou un mélange d'agents expansifs.

6. Procédé selon l'une quelconque des revendications précédentes,
**caractérisé en ce que**
la première température est comprise dans une plage allant de 80 °C à environ 120 °C.

7. Procédé selon l'une quelconque des revendications précédentes,
**caractérisé en ce que**
la ou les deuxième(s) température(s) est/sont comprise(s) dans une plage allant de 120 °C à environ 250 °C.

8. Procédé selon l'une quelconque des revendications précédentes,
**caractérisé en ce qu'**
à la place ou complémentairement à l'agent expansif chimique ou au mélange d'agents expansifs, des microsphères sont employées.

9. Procédé selon l'une quelconque des revendications précédentes,
**caractérisé en ce qu'**
on fabrique un élément composite de forme surfacique ou tridimensionnelle.

10. Procédé selon l'une quelconque des revendications précédentes,
**caractérisé en ce que**
le matériau expansible est appliqué sur la pièce support par procédé par injection, par extrusion ou par extrusion soufflage.

11. Procédé selon l'une quelconque des revendications précédentes,
**caractérisé en ce que**
une empreinte est réalisée sur le matériau expansé par une surface adaptée du moule.

12. Procédé selon l'une quelconque des revendications précédentes,
**caractérisé en ce qu'**
un matériau pour la pièce dans un premier temps non mise en forme est introduit dans le moule, le matériau expansible est appliqué et sur ce matériau et ensuite, (a) le matériau expansible est expansé et (b) la pièce support est mise en forme ou l'inverse (b, a).

13. Procédé selon l'une quelconque des revendications précédentes,
**caractérisé en ce qu'**
un matériau décoratif est appliqué sur le matériau expansible non encore expansé, et ensuite le matériau expansible est expansé.

14. Procédé selon l'une quelconque des revendications précédentes,
**caractérisé en ce que**
la cavité du moule est agrandie pour expanser le matériau expansible.

15. Procédé selon l'une quelconque des revendications précédentes,
**caractérisé en ce que**
la chaleur nécessaire pour expanser le matériau expansible est apportée au moins partiellement par la capacité thermique du moule.
